# EUROPÄISCHE PATENTANMELDUNG

(11) **EP 4 530 951 A1**
(43) Veröffentlichungstag der Anmeldung: **02.04.2025**
(21) Anmeldenummer: 23200796.3
(22) Anmeldetag: 29.09.2023
(51) Int. Cl.: G06Q 10/08

(54) **VERFAHREN ZUR GENERIERUNG UND AUSWERTUNG VON DATENSÄTZEN BETREFFEND SICH BEWEGENDE OBJEKTE, STEUEREINRICHTUNG FÜR EINE SENDER-EMPFÄNGER-ANORDNUNG UND SENDER-EMPFÄNGER-ANORDNUNG**

(71) Anmelder: Siemens Aktiengesellschaft, 80333 München (DE)
(72) Erfinder: Hein, Daniel, 81549 München (DE); Häuser, Markus, 90475 Nürnberg (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

Die Erfindung betrifft ein Verfahren zur Generierung und Auswertung von Datensätzen betreffend sich bewegende Objekte, wobei zur Generierung der Datensätze eine Sender-EmpfängerAnordnung verwendet wird, die eine Steuereinrichtung, mehrere Sender, mittels denen die Objekte bestückt sind, und wenigstens einen Empfänger umfasst, wobei zur Generierung der Datensätze jeweils die folgenden Schritte durchgeführt werden:
- Generieren eines funkbasierten Sendersignals mittels wenigstens einem der Sender und Übertragen des Sendersignals an wenigstens einen der Empfänger, sofern sich der Sender in einem Erfassungsbereich des Empfängers befindet,
- Generieren des Datensatzes mittels der Steuereinrichtung anhand des Sendersignals, wobei der Datensatz ein Identifizierungsdatum, das eine Identifizierung des diesem Datensatz zugeordneten Objekts betrifft, ein Signaldatum, das das übertragene Sendersignal betrifft, und ein Zeitdatum, das einen Zeitpunkt betrifft, zu dem sich das jeweilige Objekt an der mittels des Signaldatums beschriebenen Position befindet, umfasst,
wobei zur Auswertung der Datensätze die folgenden Schritte durchgeführt werden:
- Bestimmen wenigstens eines Clusters umfassend wenigstens zwei der Objekte, wobei Objekte dann als zu einem Cluster zugehörend gelten, wenn sich diese zumindest wahrscheinlich gemeinsam bewegen,
- Aggregieren der die Objekte des Clusters betreffenden Datensätze unter der Annahme, dass sich die den Cluster bildenden Objekte gemeinsam bewegen und Verwenden der hierbei erhaltenen Ergebnisse zur weiteren Auswertung der Datensätze.

## Beschreibung

Die vorliegende Erfindung betrifft ein Verfahren zur Generierung und Auswertung von Datensätzen betreffend sich bewegende Objekte, wobei zur Generierung der Datensätze eine Sender-Empfänger-Anordnung verwendet wird, die eine Steuereinrichtung, mehrere Sender, mittels denen die Objekte bestückt sind, und wenigstens einen Empfänger umfasst. Weiterhin betrifft die vorliegende Erfindung eine Steuereinrichtung für eine Sender-Empfänger-Anordnung, die mehrere Sender und wenigstens einen Empfänger umfasst. Schließlich betrifft die vorliegende Erfindung eine Sender-Empfänger-Anordnung.

Derartige Sender-Empfänger-Anordnungen realisieren häufig ein sogenanntes RFID-System (RFID = "Radio-Frequency IDentification"), bei dem eine Annäherung von Sendern, die häufig auch als Transponder oder Tags bezeichnet werden, an einen Empfänger, der häufig auch als Antenne bezeichnet wird, erkannt wird. Hierdurch lässt sich beispielsweise eine Durchfahrt von mit solchen Sendern bestückten respektive markierten Paketen ermitteln, etwa bei der Einfahrt in einen Lagerraum. Eine hierbei erfolgende Auswertung im Rahmen dieses Vorgangs erfasster Datensätze bedarf häufig eines hohen Rechenaufwandes, wobei aufgrund einer mangelhaften Datenqualität häufig unbefriedigende Ergebnisse erzielt werden.

Die vorliegende Erfindung stellt sich die Aufgabe, ein verbessertes Konzept im Zusammenhang mit der Generierung und Auswertung von Datensätzen betreffend sich bewegende Objekte anzugeben, insbesondere hinsichtlich einer hohen Qualität und Zuverlässigkeit entsprechender Ergebnisse.

Erfindungsgemäß gelöst wird die Aufgabe bei einem Verfahren der eingangs genannten Art dadurch, dass zur Generierung der Datensätze jeweils die folgenden Schritte durchgeführt werden:
- Generieren eines funkbasierten Sendersignals mittels wenigstens einem der Sender und Übertragen des Sendersignals an wenigstens einen der Empfänger, sofern sich der Sender in einem Erfassungsbereich des Empfängers befindet,
- Generieren des Datensatzes mittels der Steuereinrichtung anhand des Sendersignals, wobei der Datensatz ein Identifizierungsdatum, das eine Identifizierung des diesem Datensatz zugeordneten Objekts betrifft, ein Signaldatum, das das übertragene Sendersignal betrifft, und ein Zeitdatum, das einen Zeitpunkt betrifft, zu dem sich das jeweilige Objekt an der mittels des Signaldatums beschriebenen Position befindet, umfasst.

Weiterhin ist bei dem erfindungsgemäßen Verfahren vorgesehen, dass zur Auswertung der Datensätze die folgenden Schritte durchgeführt werden:
- Bestimmen wenigstens eines Clusters umfassend wenigstens zwei der Objekte, wobei Objekte dann als zu einem Cluster zugehörend gelten, wenn sich diese zumindest wahrscheinlich gemeinsam bewegen,
- Aggregieren der die Objekte des Clusters betreffenden Datensätze unter der Annahme, dass sich die den Cluster bildenden Objekte gemeinsam bewegen und Verwenden der hierbei erhaltenen Ergebnisse zur weiteren Auswertung der Datensätze.

Die Objekte können Gegenstände sein, die im Rahmen von Lagerungs- und/oder Transportzwecken bewegt werden. Bei diesen Bewegungen werden die Datensätze generiert respektive erfasst und anschließend ausgewertet respektive analysiert. Diese Datensätze betreffen beziehungsweise beschreiben diese Bewegungen, sodass beispielsweise ein sogenanntes Tracking, also eine Wegverfolgung, dieser Objekte ermöglicht wird. Zur Durchführung des erfindungsgemäßen Verfahrens ist die Steuereinrichtung vorgesehen, die insbesondere ein Computer ist, sodass das erfindungsgemäße Verfahren auch als computerimplementiert bezeichnet werden kann.

Das Generieren des Datensatzes kann dadurch erfolgen, dass das mittels des wenigstens einen Empfängers erfasste Sendersignal analysiert wird. So ist die Steuereinrichtung zur Generierung der Datensätze eingerichtet, wobei die Steuereinrichtung zu diesem Zweck das Sendersignal entsprechend auswertet und analysiert. Das Sendersignal ist bevorzugt ein Radiosignal. Der Datensatz oder einzelne Daten des Datensatzes können von dem Sender zu dem Empfänger, der insbesondere ortsfest ist, respektive der Steuereinrichtung übertragen werden, wobei das Sendersignal als Träger dieser Daten respektive Informationen fungieren kann. Zudem kann eine physikalische Eigenschaft des Sendersignals ermittelt beziehungsweise bestimmt werden, wobei der Datensatz oder ein Datum des Datensatzes diese Eigenschaft beschreibt oder anhand dieser bestimmt wird.

Bezüglich des Senders kann vorgesehen sein, dass dieser eine Ausdehnung wenigstens in der Größenordnung von Millimetern und höchstens in der Größenordnung von Zentimetern aufweist. Der Sender kann flach und/oder platten- beziehungsweise etikettartig sein. Der Sender kann ein an dem jeweiligen Objekt befestigter Anhänger oder Aufkleber sein. Der Sender kann aus einem Kunststoff bestehen. Der Sender kann einen Chip, insbesondere einen Mikrochip, mit einer elektrischen Schaltung aufweisen, mittels der das Sendersignal generierbar ist. Zur Generierung des Sendersignals kann der Sender eine Senderantenne aufweisen.

Jeder der Datensätze umfasst mehrere Daten, die jeweils einem Datenfeld zugeordnet sind. Mithin bildet quasi jeder der Datensätze einen Vektor mit mehreren Einträgen, die jeweils einem Datenfeld zuordenbar sind.

Der Datensatz umfasst das Identifizierungsdatum, dass eine Identifizierung des diesem Datensatz zugeordneten Objekts betrifft. Da die Objekte jeweils mit bevorzugt genau einem Sender bestückt sind, kann das Identifizierungsdatum entsprechend analog eine Identifizierung des diesem Datensatz zugeordneten Senders betreffen. Das Sendersignal kann bezüglich des Identifizierungsdatums als Informationsträger dienen. Anders ausgedrückt kann eine Daten- oder Informationsübertragung von dem Sender zum Empfänger beziehungsweise der Steuereinrichtung erfolgen, etwa unter Nutzung einer Verschlüsselung. So kann das Identifizierungsdatum ein das Objekt beziehungsweise den Sender kennzeichnender Code sein.

Weiterhin umfasst jeder der Datensätze das Signaldatum, das das übertragene Sendersignal betrifft. Das bedeutet, dass das Signaldatum eine Eigenschaft des Sendersignals oder auch den Umstand, ob das Sendersignal empfängerseitig erfasst wurde, betrifft. Besonders bevorzugt betrifft das das Signaldatum eine aktuelle Position respektive den aktuellen Ort des jeweiligen Objekts beziehungsweise des Senders, wobei das Signaldatum in diesem Fall auch als ein Positionsdatum bezeichnet werden kann. Die Bestimmung des die Position betreffenden Positionsdatums ist deshalb möglich, da das empfängerseitig erfasste Sendersignal oder hiervon abhängende Größen von der aktuellen Position des jeweiligen Senders abhängen. Die aktuelle Position kann sich auf eine Absolutposition beziehen, etwa auf geographische Koordinaten. Die aktuelle Position kann sich auf eine Relativposition, insbesondere bezüglich des Empfängers, mittels dem das jeweilige Sendersignal und mithin der jeweilige Datensatz erfasst wurde, beziehen. Das Sendersignal kann bezüglich des Signaldatums als Informationsträger dienen. Zusätzlich oder alternativ kann das Signal- oder Positionsdatum von einer physikalischen Eigenschaft des erfassten Sendersignals abhängen oder dieses darstellen.

Außerdem umfasst jeder der Datensätze ein Zeitdatum, dass den Zeitpunkt betrifft, zu dem sich das zugehörige Objekt an der mittels des Signaldatums beschriebenen Position befindet.

Mithin kann das Zeitdatum den Zeitpunkt betreffen, zu dem das Sendersignal seitens des Senders generiert wurde, zu dem das Sendersignals seitens des Empfängers erfasst wurde und/oder zu dem die Generierung seitens der Steuereinrichtung erfolgt.

Nachdem die Datensätze generiert wurden, werden diese seitens der Steuereinrichtung ausgewertet. Nach der Generierung der Datensätze werden diese mittels eines Datenspeichers, etwa der Steuereinrichtung, gespeichert beziehungsweise gepuffert. Die Erfassung respektive Generierung der Datensätze und deren Auswertung kann auch parallel erfolgen. Das bedeutet, dass die bisher erfassten und insbesondere in dem Datenspeicher gepufferte Datensätze ausgewertet und parallel hierzu ergänzt und mithin erweitert werden. Es kann folglich eine sukzessive Auswertung der Datensätze erfolgen, wobei die zur Verfügung stehende Datenbasis immer umfangreicher wird.

Einer der zentralen Aspekte bei dem erfindungsgemäßen Verfahren besteht darin, dass, insbesondere anhand der Datensätze, bestimmt wird, ob bestimmte Objekte zu einem Cluster gehören. So können mehrere Objekte dem Cluster zugeordnet werden, sofern sich diese Objekte gemeinsam bewegen, also deren Relativposition zueinander während der Durchführung des Verfahrens unverändert bleibt. Im Rahmen der Datenauswertung ist denkbar, dass jeweils ein Wert für eine Wahrscheinlichkeit bestimmt wird, dass mehrere Objekte, insbesondere paarweise, zu dem Cluster gehören. So kann bezüglich der Datenauswertung angenommen werden, dass diese Objekte einen Cluster bilden, sofern dies zumindest wahrscheinlich der Fall ist oder, konkret gesprochen, die Wahrscheinlichkeit diesbezüglich einen, insbesondere fest vorgegebenen, Wert übersteigt. Dieser Wert beträgt beispielsweise mindestens 60 %, insbesondere mindestens 70 %, bevorzugt mindestens 80 %, besonders bevorzugt mindestens 90 %.

Sofern bekannt ist oder anhand des soeben Erläuterten angenommen wird, dass mehrere der Objekte und mithin Sender und mithin Datensätze einem Cluster zuordenbar sind, dann ist es hinsichtlich der Datenauswertung vorteilhaft und zweckmäßig, diesen Umstand hierbei zu berücksichtigen. Folglich erfolgt erfindungsgemäß eine Aggregation derjenigen Datensätze, die einem Cluster zuordenbar sind. Das bedeutet, dass diese Datensätze zusammengeführt werden, wobei berücksichtigt wird, dass sich die jeweiligen Objekte und mithin Sender gemeinsam bewegen und sich in unmittelbarer Nähe zueinander befinden, näherungsweise an derselben Position. Hierdurch wird bewirkt, dass die Datenqualität betreffend die Ergebnisse respektive Prognosen bezüglich der Objekte dieses Clusters verbessert wird, insbesondere gegenüber dem Fall, bei dem eine separate Auswertung der Datensätze bezüglich der jeweils einzelnen Objekte und nicht des gesamten Clusters erfolgt.

Im Rahmen des erfindungsgemäßen Verfahrens kann vorgesehen sein, dass mittels des wenigstens einen Empfängers ein funkbasiertes Anfragesignal generiert wird, wobei das wenigstens eine Sendersignal als Reaktion auf die Erfassung des Anfragesignals durch den jeweiligen Sender generiert wird. Hierbei fungiert der Empfänger zusätzlich als ein Mittel zum Senden des Anfragesignals, das ein Radiosignal sein kann. Der Empfänger kann auch als eine Antenne bezeichnet werden. Das Anfragesignal kann mehrfach sukzessive, insbesondere zyklisch, generiert werden, sodass die Generierung der Datensätze ebenfalls zeitlich sukzessive erfolgen kann. Sofern mehrere Sender vorgesehen sind, ist denkbar, dass diese abwechselnd, insbesondere reihum rollierend, das Anfragesignal generieren. Weiterhin kann vorgesehen sein, dass die Datensätze jeweils ein Empfängerdatum umfassen, dass eine Identifizierung des jeweiligen Empfängers, mittels dem das jeweilige Sendersignal empfangen wurde, betrifft. Das Empfängerdatum gibt an, mittels welcher Antenne oder mittels welches Empfängers das Sendersignal, anhand dem der vorliegende Datensatz generiert wurde, empfangen wurde.

Sofern mehrere Empfänger vorgesehen sind, können diese quasi gehäuft und nebeneinander an einem Ort positioniert sein, der bezüglich des Trackings von Relevanz ist. Solche Orte können auch als RFID- oder Empfänger-Tor bezeichnet werden und insbesondere einen Ein- und Ausgang eines Lagers betreffen. Häufig erfolgt ein Tracking von Objekten bei Empfänger-Toren derart, dass erkannt wird, ob das jeweilige Objekt dieser Stelle passiert hat. An dieser Stelle können etwa vier oder acht Empfänger vorgesehen sein.

Die zur Generierung des Sendersignals genutzte Energie kann seitens des jeweiligen Senders aus dem Anfragesignal gewonnen werden. So kann das Anfragesignal eine elektromagnetische Welle sein, mittels der seitens der Senderantenne elektrische Ströme induziert werden, die wiederum dazu genutzt werden, den Chip des Senders zu betreiben und insbesondere das Sendersignal, bevorzugt ebenfalls mittels der Senderantenne, zu generieren. Der Sender kann im Rahmen dieser Ausführungsform als passiver Sender bezeichnet werden. Alternativ kann der Sender als ein aktiver Sender bezeichnet werden, und zwar wenn die zur Generierung des Sendersignal erforderliche Energie mittels eines elektrischen Energiespeichers, der auch als eine Batterie bezeichnet werden kann, des jeweiligen Senders bereitgestellt wird.

Das Signaldatums kann, sofern dieses die Position des jeweiligen Objekts respektive Senders betrifft, anhand einer Signalstärke des Sendersignals ermittelt werden oder diese beschreiben. Hierbei betrifft oder beschreibt das Signaldatums den Abstand zwischen dem Empfänger und dem jeweiligen Sender. So nimmt die Signalstärke des Sendersignal mit größerer Entfernung zwischen Sender und Empfänger ab. Konkret kann das Signaldatum ein Ergebnis betreffend die Signalstärke sein, das anhand einer RSSI- (RSSI = "Received Signal Strength Indicator") und/oder Phasenanalyse ermittelt wurde.

Zusätzlich oder alternativ kann vorgesehen sein, dass das Signaldatum eine binäre Information ist, die angibt, ob seitens des Empfängers das Sendersignal erfasst wurde. Das bedeutet, dass das Sendersignal in diesem Fall angibt, ob sich der Sender aktuell in einem Erfassungsbereich des Empfängers, insbesondere innerhalb eines bestimmten Radius um den Empfänger, befindet oder nicht, was ersichtlich die aktuelle Position des Objekts betrifft. So kann etwa für den Fall, dass ein Anfragesignal generiert und ausgegeben wurde, wobei daraufhin für ein bestimmtes Objekt respektive einen bestimmten Sender eine Antwort, also das Sendersignal, nicht erfasst werden konnte, dies als Signaldatum bei dem jeweiligen Datensatz hinterlegt werden.

Das Bestimmen des wenigstens einen Clusters kann anhand einer nutzerseitig oder automatisch erfolgenden Vorgabe erfolgen, mittels der wenigstens ein bekannter Cluster angegeben wird. So ist denkbar, dass seitens eines Nutzers oder eines Betriebssystems, das im Rahmen der Durchführung der vorliegenden Transportvorgänge genutzt wird, bekannt ist, dass mehrere der Objekte einen Cluster bilden. So kann etwa bekannt sein, dass bestimmte Objekte Pakete sind die auf einer gemeinsamen Palette transportiert werden und mithin die Voraussetzungen eines Clusters erfüllen. In diesem Fall kann der Nutzer diese Information mittels einer Bedienhandlung an einer Eingabeschnittstelle der Sender-Empfänger-Anordnung der Steuereinrichtung bereitstellen. Zudem oder alternativ ist denkbar, dass das Bestimmen des wenigstens einen Clusters anhand des Identifizierungsdatums erfolgt. So können die Identifizierungsdaten verschiedener Datensätze ein gemeinsames Muster aufweisen, das einen Rückschluss auf das Vorliegen eines Clusters erlaubt. Denkbar sind etwa identische, ähnliche oder fortlaufende Zeichenfolgen bei den Identifizierungsdaten.

Zusätzlich oder alternativ hierzu kann das Bestimmen des wenigstens einen Clusters anhand einer Auswertung der Datensätze erfolgen. So können die Datensätze ein Bewegungsverhalten der jeweiligen Objekte implizieren, aus dem sich schließen lässt, ob diese Objekte einen Cluster bilden. Die hierauf gerichtete Auswertung der Datensätze kann konkret und beispielhaft mittels eines k-Means- und/oder eines DBSCAN- und/oder eines spektralen Clusteringverfahrens erfolgen.

Zusätzlich oder alternativ kann die Auswertung der Datensätze mittels einer künstlichen Intelligenz erfolgen, die insbesondere seitens der Steuereinrichtung implementiert ist. Konkret kann eine Deep-Learning-Engine vorgesehen sein, also eine technische Einrichtung mit einem neuronalen Netzwerk. Die künstliche Intelligenz bietet gegenüber fest vorgegebenen Algorithmen, die im Rahmen des erfindungsgemäßen Verfahrens gleichermaßen denkbar sind, den Vorteil, dass nicht offensichtliche und somit auch im Rahmen eines vorgegebenen Algorithmus nicht berücksichtigbare, aber dennoch existierende Abhängigkeiten zwischen den Datensätzen und den Ergebnissen der Datenauswertung genutzt werden. Insbesondere wenn eine sehr umfangreiche Datenbasis umfassend eine Vielzahl von Datensätzen vorliegt, kann eine auf einer künstlichen Intelligenz basierende Datenauswertung, etwa zur Realisierung eines sogenannten Data-Mining-Prozesses, äußerst effektiv sein.

Die künstliche Intelligenz kann mittels geeigneter Trainings-Datensätze vor dem realen Einsatz trainiert werden. Die Trainings-Datensätze können über einen längeren Zeitraum erfasste Datensätze umfassen, anhand derer die künstliche Intelligenz Ergebnisse generiert, die mit korrekten, also tatsächlichen oder realen Ergebnissen verglichen und bezüglich ihrer Konsistenz hin überprüft werden, so dass ein stetig fortschreitender Lernprozess der künstlichen Intelligenz erfolgt. Es ist auch denkbar, dass die künstliche Intelligenz während des eigentlichen Einsatzes weiter trainiert wird. Dies bietet den Vorteil, dass die Auswertung der Datensätze spezifisch für die jeweilige Umgebung erfolgt und immer bessere Ergebnisse liefert.

Zur Bestimmung ob mehrere Objekte einen Cluster bilden, können die diesen Objekten zugeordneten Datensätze dahingehend ausgewertet werden, ob Datensätze, die unterschiedlichen Objekten zugeordnet sind, in einem selben Zeitintervall erfasst wurden und/oder ob eine Abwesenheit von unterschiedlichen Objekten zugeordneten Datensätzen in einem selben Zeitintervall gegeben ist. Im Rahmen dieser Ausführungsform wird der Umstand beziehungsweise die Kenntnis ausgenutzt, dass die einen Cluster bildenden Objekte stets in unmittelbarer Nähe zueinander angeordnet sind. Das bedeutet, dass, wenn sich eines dieser Objekte in dem Erfassungsbereich des Empfängers befindet, dies auch für alle anderen Objekte dieses Clusters gilt. Folglich ist die Wahrscheinlichkeit erhöht, dass Objekte, deren Datensätze innerhalb eines Zeitraums beziehungsweise gleichzeitig erfasst und/oder nicht erfasst werden, einen Cluster bilden.

Wie bereits oben erläutert wurde, ist denkbar, dass die Datensätze jeweils ein Empfängerdatum umfassen, das eine Identifizierung eines von mehreren Empfängern, mittels dem das jeweilige Sendersignal erfasst wurde, betrifft. In diesem Fall ist denkbar, dass zur Bestimmung, ob mehrere Objekte einen Cluster bilden, die diesen Objekten zugeordneten Datensätze dahingehend ausgewertet werden, ob Datensätze, die unterschiedlichen Objekten zugeordnet sind und die während eines selben Zeitintervalls erfasst wurden, mittels des selben Empfängers oder mittels den selben Empfängern erfasst wurden und/oder eine Nichterfassung von unterschiedlichen Objekten zugeordneten Datensätzen betreffend den selben Empfänger oder die selben Empfänger gegeben ist. Im Rahmen dieser Ausführungsform wird der Umstand beziehungsweise die Kenntnis ausgenutzt, dass unterschiedliche Empfänger unterschiedliche Empfangsbereiche abdecken. Unter dem Empfangsbereich wird derjenige Bereich in der Umgebung, in der sich die Empfänger befinden, verstanden, bei dem mittels des jeweiligen Empfängers das Sendersignal empfangbar ist, sofern sich der Sender in diesem Bereich befindet. So können Bereiche vorliegen, die in den Empfangsbereichen mehrerer Empfänger liegen. Mithin ist die Wahrscheinlichkeit erhöht, dass Objekte, bezüglich derer Datensätze innerhalb eines Zeitraums oder gleichzeitig von einem bestimmten Empfänger oder mehreren bestimmten Empfängern erfasst werden, einen Cluster bilden. Zudem ist die Wahrscheinlichkeit erhöht, dass Objekte, zu denen Datensätze bezüglich wenigstens einem der Empfänger während des Zeitraums oder gleichzeitig nicht vorliegen, ebenfalls einen Cluster bilden.

Wie bereits oben erläutert wurde, kann vorgesehen sein, dass die Generierung des Anfragesignals mehrfach sukzessive, insbesondere zyklisch, erfolgt. In diesem Fall ist denkbar, dass zur Bestimmung, ob mehrere Objekte einen Cluster bilden, die diesen Objekten zugeordneten Datensätze dahingehend ausgewertet werden, ob eine Anzahl und/oder eine Frequenz von vorliegenden Datensätzen, die unterschiedlichen Objekten zugeordnet sind und die während eines selben Zeitintervalls erfasst wurden, nicht oder nur wenig voneinander abweichen. In dieser Ausführungsform wird der Umstand beziehungsweise die Kenntnis ausgenutzt, dass die Wahrscheinlichkeit, dass ein Sendersignal generiert, ausgegeben und erfasst wird, umso höher ist, je näher sich der jeweilige Sender an dem Empfänger befindet. Mithin ist auch die Anzahl der Datensätze innerhalb des Zeitraums umso höher, je näher sich der jeweilige Sender an dem Empfänger befindet. Selbiges gilt für die Frequenz der Datensätze, also der Häufigkeit des Vorliegens von Datensätzen innerhalb einer Zeiteinheit, etwa die Anzahl der Datensätze bezüglich eines jeweiligen Objekts pro Minute. Ist mithin die Anzahl und/oder die Frequenz von Datensätzen unterschiedlicher Objekte gleich oder weichen diese nur beispielsweise maximal um einen, insbesondere fest vorgegebenen, Grenzwert voneinander ab, dann ist die Wahrscheinlichkeit erhöht, dass diese Objekte einen Cluster bilden.

Weiterhin ist denkbar, dass zur Bestimmung, ob mehrere Objekte einen Cluster bilden, die diesen Objekten zugeordneten Datensätze dahingehend ausgewertet werden, ob Datensätze, die unterschiedlichen Objekten zugeordnet sind und die während eines selben Zeitintervalls erfasst wurden, bezüglich des Signaldatums nicht oder nur wenig voneinander abweichen. Im Rahmen dieser Ausführungsform wird die Kenntnis beziehungsweise der Umstand ausgenutzt, dass Objekte eines Clusters aufgrund ihrer unmittelbaren Nähe zueinander denselben oder zumindest einen ähnlichen Abstand zum Empfänger aufweisen. Ist mithin die Position unterschiedlicher Objekte gleich oder weichen diese nur beispielsweise maximal um einen, insbesondere fest vorgegebenen, Grenzwert voneinander ab, dann ist die Wahrscheinlichkeit erhöht, dass diese Objekte einen Cluster bilden.

Schließlich ist im Rahmen des erfindungsgemäßen Verfahrens denkbar, dass zur Bestimmung, ob mehrere Objekte einen Cluster bilden, die diesen Objekten zugeordneten Datensätze dahingehend ausgewertet werden, ob Datensätze, die unterschiedlichen Objekten zugeordnet sind und die während eines selben Zeitintervalls erfasst wurden, bezüglich einer Streuung des Signaldatums, insbesondere des Positionsdatums, nicht oder nur wenig voneinander abweichen. Auch hier wird der Umstand respektive die Kenntnis ausgenutzt, dass die Objekte eines Clusters in unmittelbarer Nähe zueinander angeordnet sind. Wird die Erfassung des Sendersignal eines der Objekte respektive einem der Sender aufgrund widriger Umstände gestört, etwa da sich zwischen dem Sender und dem Empfänger ein eine Streuung beziehungsweise Schwächung des Sendersignals bewirkender Gegenstand befindet, so gilt dies auch für die Sendersignale der anderen Objekte dieses Clusters. Eine verringerte Datenqualität und mithin eine entsprechend hohe Streuung der Signaldaten während des selben Zeitraums implizieren mithin eine Erhöhung der Wahrscheinlichkeit, dass die jeweiligen Objekte zu einem Cluster gehören.

Bezüglich der Aggregation der die Objekte des Clusters betreffenden Datensätze kann vorgesehen sein, dass hierzu eine Addition oder eine Mittelung betreffend die Signaldaten, insbesondere die Positionsdaten, vorgenommen wird. Derartige Maßnahmen im Rahmen einer Datenaggregation bewirken typischerweise eine Verbesserung des Signal-zu-Rausch-Verhältnisses. Weiterhin ist bezüglich der Aggregation denkbar, dass ein Ausfiltern von Ausreißern und/oder eine zusätzliche Gewichtung besonders relevanter Datenpunkte, etwa betreffend einen ersten oder einen letzten Zeitpunkt, zudem eine Generierung eines Datensatzes erfolgt ist, vorgenommen wird.

Bei dem erfindungsgemäßen Verfahren kann vorgesehen sein, dass nach der Aggregation der Signaldaten, die Positionsdaten darstellen, im Rahmen der weiteren Auswertung der Datensätze eine Absolutposition des Clusters bestimmt wird. So können mehrere Empfänger vorgesehen sein, wobei für die Datensätze, die den jeweiligen Empfängern zugeordnet sind, jeweils die Datenaggregation gemäß obiger Beschreibung vorgenommen wurde. Anhand dieser aggregierten Daten kann die Relativposition respektive der Abstand zwischen dem Cluster und jedem der Empfänger in Abhängigkeit der Zeit vorgegeben sein. Insbesondere da aufgrund der Aggregation ein verbessertes Signal-zu-Rausch-Verhältnis vorliegt, kann anhand der entsprechenden Zeitkurven die Absolutposition in Abhängigkeit der Zeit bestimmt werden. Diese Auswertung kann anhand einer Triangulierung von Datensätzen betreffend unterschiedliche Empfänger erfolgen.

Denkbar ist überdies oder alternativ, dass nach der Aggregation der Signaldaten, die Positionsdaten darstellen, im Rahmen der weiteren Auswertung der Datensätze bestimmt wird, ob ein Cluster den wenigstens einen Empfänger passiert hat. Bevorzugt ist vorgesehen, dass entsprechend bestimmt wird, ob ein Cluster ein RFID- oder Empfänger-Tor passiert hat, also einen Ort, an dem mehrere Empfänger nebeneinander positioniert sind. Im Rahmen dieser Ausführungsform wird der Vorteil des erfindungsgemäßen Konzepts besonders deutlich. So ist denkbar, dass die Sendersignale eines bestimmten Senders beziehungsweise Objekts nur mit äußerst schlechter Datenqualität oder gar nicht erfasst worden sind. Ist dieses Objekt beziehungsweise dieser Sender einem Cluster zuordenbar, für den ermittelt wurde, dass dieser das Empfänger-Tor passiert hat, so gilt ist dieses Ergebnis auf dieses Objekt beziehungsweise diesen Sender übertragbar. Dieses Ergebnis hätte im Rahmen der herkömmlichen, also nicht-datenaggregierenden Datenauswertung, für dieses Objekt beziehungsweise diesen Cluster nicht ermittelt werden können.

Gelöst wird die Aufgabe der vorliegenden Erfindung ferner durch eine Steuereinrichtung der eingangs genannten Art, die erfindungsgemäß zur Durchführung eines Verfahrens gemäß obiger Beschreibung eingerichtet ist. Alle im Zusammenhang mit dem erfindungsgemäßen Verfahren erläuterten Vorteile, Aspekte und Merkmale sind auf die erfindungsgemäße Steuereinrichtung übertragbar und umgekehrt.

Weiterhin wird die Aufgabe der vorliegenden Erfindung gelöst durch eine Sender-Empfänger-Anordnung, die erfindungsgemäß eine Steuereinrichtung gemäß der vorangehenden Beschreibungspassage und mehrere Sender sowie wenigstens einen Empfänger umfasst. Alle im Zusammenhang mit dem erfindungsgemäßen Verfahren und der erfindungsgemäßen Steuereinrichtung erläuterten Vorteile, Aspekte und Merkmale sind auf die erfindungsgemäße Sender-Empfänger-Anordnung übertragbar und umgekehrt.

Weitere Vorteile, Einzelheiten und Aspekte der vorliegenden Erfindung ergeben sich aus den nachfolgend erläuterten Ausführungsbeispiel sowie anhand der Figuren. Diese zeigen schematisch:
- Fig. 1: eine Umgebung mit mehreren Objekten und einer erfindungsgemäßen Sender-Empfänger-Anordnung gemäß einem Ausführungsbeispiel, wobei die Sender-Empfänger-Anordnung eine erfindungsgemäße Steuereinrichtung gemäß einem Ausführungsbeispiel umfasst,
- Fig. 2: ein Koordinatensystem zur Visualisierung mehrere Datensätze, die im Rahmen der Durchführung eines erfindungsgemäßen Verfahrens gemäß einem Ausführungsbeispiel mittels der Steuereinrichtung der Sender-Empfänger-Anordnung der Fig. 1 generiert wurden, und
- Fig. 3: dasselbe Koordinatensystem wie in Fig. 2, wobei einige der Datensätze aggregiert wurden.

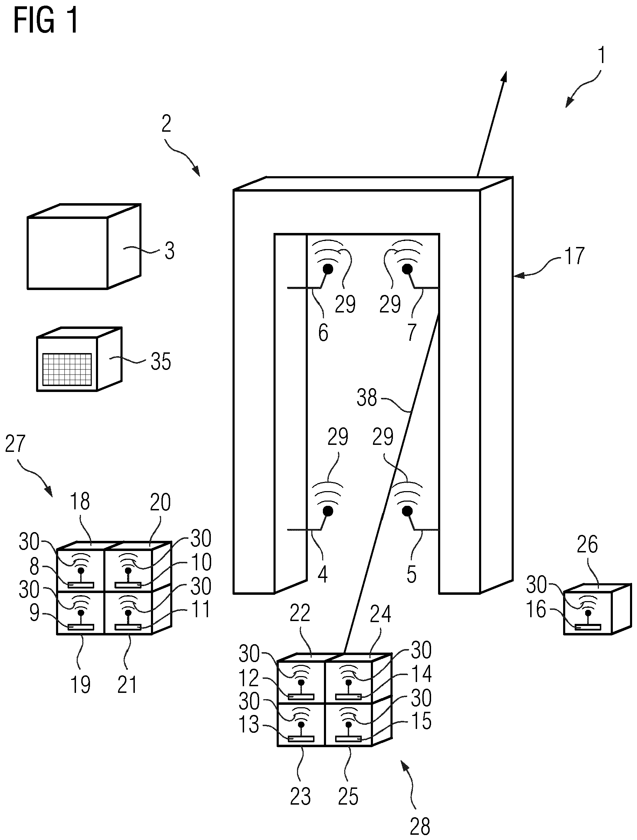

Fig. 1 zeigt eine Umgebung 1, vorliegend umfassend eine Lagerhalle, in der eine erfindungsgemäße Sender-Empfänger-Anordnung 2 gemäß einem Ausführungsbeispiel vorhanden ist. Die Sender-Empfänger-Anordnung 2 umfasst eine Steuereinrichtung 3, vier mit der Steuereinrichtung 3 verbundene, als Antennen ausgebildete Empfänger 4 - 7. Die Empfänger 4 - 7 sind an einem einen Ein- und Ausgang bildenden RFID- beziehungsweise Empfänger-Tor 17 der Lagerhalle angeordnet. Weiterhin umfasst die Sender-Empfänger-Anordnung 2 neun, jeweils einen Anhänger und Transponder realisierende, Sender 8 - 16. Die aus Kunststoff bestehenden Sender 8 - 16 haben eine Ausdehnung weniger Zentimeter und sind flach respektive plattenartig. Jeder der Sender 8 - 16 ist ein Anhänger der an einem mehrerer Objekte 18 - 26 befestigt ist. Die Sender 8 - 16 umfassen jeweils einen Chip mit einer elektrischen Schaltung.

In der Umgebung 1 befinden sich die Objekte 18 - 26, die vorliegend neun Warenpakete sind. Die vier Objekte 18 - 21 und die vier Objekte 22 - 25 werden jeweils gemeinsam auf einer Palette transportiert. Die vier Objekte 18 - 21 und die vier Objekte 22 - 25 bilden mithin jeweils einen Cluster 27, 28, der sich dadurch definiert, dass sich die Objekte 18 - 21, 22 - 25 des jeweiligen Clusters 27, 28 gemeinsam bewegen, also eine Relativposition dieser Objekte 18 - 21, 22 - 25 während der Durchführung des Verfahrens zueinander konstant bleibt. Das Ziel des erfindungsgemäßen Verfahrens gemäß des nachfolgend anhand der Fig. 1 erläuterten Ausführungsbeispiels ist die Durchführung eines Trackings der Objekte 18 - 26. Konkret wird die Sender-Empfänger-Anordnung 2 hierzu dazu verwendet, das Passieren der jeweiligen Objekte 18 - 26 am Tor 17 zu erfassen respektive zu detektieren. Zur Durchführung des Verfahrens ist die Steuereinrichtung 3 eingerichtet.

Bevor die zur Durchführung des Verfahrens vorgesehenen Schritte erläutert werden, werden zunächst weitere Details der Sender-Empfänger-Anordnung 2 erläutert, die ein sogenanntes RFID-System darstellt. So wird mittels der Empfänger 4 - 7 sich zyklisch wiederholend jeweils ein funkbeziehungsweise radiobasiertes Anfragesignal 29 generiert, also erzeugt und ausgegeben. Diese Generierung erfolgt rollierend, wobei zunächst der Empfänger 4, anschließend der Empfänger 5, anschließend der Empfänger 6, und anschließend der Empfänger 7 das jeweilige Anfragesignal 29 generiert, und zwar mit einem zeitlichen Abstand von beispielsweise einer Sekunde.

Die sich in der Nähe des jeweiligen Empfängers 4 - 7 befindenden Sender 8 - 16 empfangen das Anfragesignal 29, sofern sich diese in dem Erfassungsbereich des jeweiligen Empfängers 4 - 7 befinden. Zum Empfangen des Anfragesignals 29 umfasst jeder der Sender 8 - 16 eine Senderantenne. Die elektrische Schaltung des jeweiligen Senders 8 - 16 ist dazu eingerichtet und ausgebildet, dass bei der Erfassung des Anfragesignals 29 ein Sendersignal 30 mittels der Senderantenne generiert, also erzeugt und ausgegeben wird. Das Sendersignal 30 ist ebenfalls ein Funk- respektive Radiosignal. Die zur Generierung des Sendersignals 30 genutzte Energie wird, wie auch die zum Betrieb des jeweiligen Senders 8 - 16 grundsätzlich benötigte Energie, aus dem Anfragesignal 29 gewonnen. Hierbei wird der mittels des Anfragesignals 29 induzierte elektrische Strom in der jeweiligen Senderantenne genutzt. Zusätzlich oder alternativ kann die zum Betrieb des Senders 8 - 16, insbesondere die zur Generierung des Sendersignals genutzte Energie, mittels eines elektrischen Energiespeichers des jeweiligen Senders 8 - 16 bereitgestellt werden.

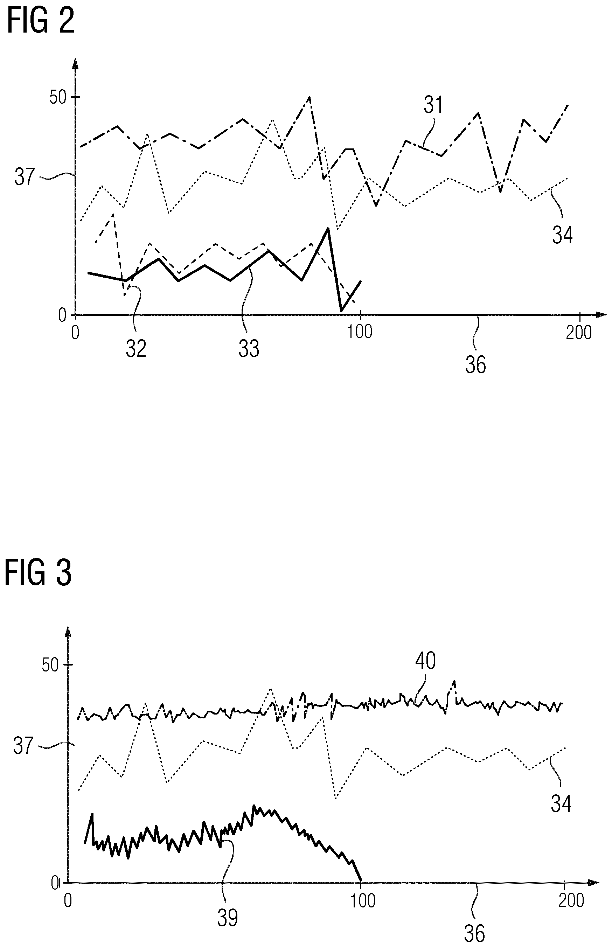

Die Sendersignale 30 werden von demjenigen Empfänger 4 - 7 empfangen, der das die Generierung dieses Sendersignals 30 triggernde Anfragesignal 29 generiert hat. Das Sendersignal 30 oder aus dem Empfang des Sendersignals 30 mittels des Empfängers 4 - 7 abgeleitete Informationen werden anschließend über nicht näher gezeigte Datenleitungen wie etwa Datenkabel an die Steuereinrichtung 3 übertragen. Mittels der Steuereinrichtung 3 wird zu jedem von einem der Empfänger 4 - 7 empfangenen Sendersignal 30 ein Datensatz 31 - 34 generiert, wobei die Datensätze 31 - 34 in der später erläuterten Fig. 2 dargestellt sind. Jeder der Datensätze 31 - 34 umfasst mehrere, jeweils einem spezifischen Datum zugeordnete Datenfelder, wobei Details diesbezüglich nachfolgend erläutert werden.

So umfasst jeder der Datensätze 31 - 34 ein Identifizierungsdatum, das eine Identifizierung des diesem Datensatz zugeordneten Objekts 18 - 26 betrifft. Konkret betrifft dieses eine Identifizierung des diesem Datensatz 31 - 34 zugeordneten Senders 8 - 16, was aber vorliegend, da jedes der Objekte 18 - 26 genau einen der Sender 8 - 16 trägt, äquivalent ist. Das Identifizierungsdatum ist vorliegend ein das jeweilige Objekt 18 - 26 respektive den jeweiligen Sender 8 - 16 kennzeichnender Code oder schlicht eine fortlaufende Zahl, der oder die mittels dem Sendersignal 30 als Informationsträger von dem Sender 8 - 16 über den Empfänger 4 - 7 zu der Steuereinrichtung 3 übertragen wird. Der Code oder die Zahl wird in das dem Identifizierungsdatum zugeordneten Datenfeld des Datensatzes 31 - 34 eingetragen.

Weiterhin umfasst jeder der Datensätze 31 - 34 ein Signaldatum, das anhand des Sendersingals generiert wird und vorliegend eine aktuelle Position des diesem Datensatzes 31 - 34 zugeordneten Objekts 18 - 26 respektive Senders 8 - 16 betrifft. Das Signaldatum kann eine Absolutposition des jeweiligen Objekts 18 - 26 respektive Senders 8 - 16 betreffen, also beispielsweise geographische Koordinaten oder Koordinaten in einem ortsfesten Koordinatensystem der Umgebung 1. Vorliegend betrifft das Signaldatum stattdessen eine Relativposition zwischen dem Sender 8 - 16, der das zugehörigen Sendersignal 30 generiert hat, und dem Empfänger 4 - 7, mittels dem dieses Sendersignal 30 erfasst wurde. Das Sendersignal 30 dient bezüglich des Signaldatums, im Gegensatz zum Identifizierungsdatum, nicht als Informationsträger im Rahmen einer Datenübertragung. Zur Generierung des Signaldatums wird stattdessen eine physikalische Eigenschaft des erfassten Sendersignal 30 genutzt. So wird als Signaldatum eine Signalstärke des Sendersignals 30 ermittelt, was vorliegend im Rahmen einer RSSI- oder Phasenanalyse erfolgt. Ersichtlich stellt die Signalstärke ein Maß dafür dar, wie weit sich das Objekt 18 - 26 respektive der Sender 8 - 16 vom jeweiligen Empfänger 4 - 7 entfernt befindet. Der mittels der RSSI- oder Phasenanalyse bestimmte Wert wird in das dem Signaldatums zugeordnete Datenfeld des jeweiligen Datensatzes 31 - 34 eingetragen.

Im Gegensatz zum zuvor Beschriebenen kann, etwa wenn die Durchführung der RSSI- oder Phasenanalyse aufgrund einer nicht ausreichenden Signalstärke nicht durchführbar oder grundsätzlich nicht vorgesehen ist, bezüglich des Signaldatums vorgesehen sein, dass dieses binär ist und angibt, ob seitens des Empfängers 4 - 7 das Sendersignal 30 erfasst wurde, also ob sich der jeweilige Sender 8 - 16 aktuell im Erfassungsbereich des jeweiligen Empfängers 4 - 7 befindet. Das Signaldatum wird im Rahmen dieser Ausführungsform dadurch generiert, dass ermittelt wird, ob bezüglich des jeweiligen Senders 8 - 16 das Sendersignal erfasst wurde oder nicht. Anders ausgedrückt wird ermittelt, ob als Reaktion auf die Generierung des Anfragesignals 29 eine Antwort des Senders 8 - 16 erfasst wurde oder nicht.

Überdies umfasst jeder der Datensätze 31 - 34 ein Zeitdatum, das einen Zeitpunkt betrifft, zu dem sich das jeweilige Objekt 18 - 26 respektive der jeweilige Sender 8 - 16 an der mittels des Signaldatums beschriebenen Position befindet. Das Zeitdatum beschreibt den Zeitpunkt, zu dem das Sendersignal seitens des Senders generiert wurde. Alternativ beschreibt das Zeitdatum den Zeitpunkt, zu dem das Sendersignal seitens des Empfängers erfasst wurde. Alternativ beschreibt das Zeitdatum den Zeitpunkt, zu dem die Generierung seitens der Steuereinrichtung erfolgt. Die Unterschiede der hierbei erfassten Zeitpunkte sind typischerweise klein genug, so dass diese für die weitere Durchführung des Verfahrens keine Signifikanz besitzen. Das Zeitdatum kann als eine Datumsangabe inklusive Uhrzeit vorliegen. Vorliegend betrifft das Zeitdatum eine Sekundenangabe beschreibend die Zeit, die seit des Beginns der Durchführung des Verfahrens verstrichen ist. Der so bestimmte Wert wird in das dem Zeitdatum zugeordnete Datenfeld des Datensatzes 31 - 34 eingetragen.

Ferner umfasst jeder der Datensätze 31 - 34 ein Empfängerdatum, das eine Identifizierung desjenigen Empfängers 4 - 7 betrifft, mittels dem das jeweilige Sendersignal 30 erfasst wurde. So wird im Zuge der Informationsübertragung von dem Empfänger 4 - 7 an die Steuereinrichtung 3 eine Information betreffend die Identifizierung des jeweiligen Empfänger 4 - 7 übertragen. Diese kann ein den jeweiligen Empfänger 4 - 7 kennzeichnender Code oder schlicht eine fortlaufende Zahl sein, der oder die in das dem Empfängerdatum zugeordnete Datenfeld des jeweiligen Datensatzes 31 - 34 eingetragen wird.

Ein weiteres Datenfeld des jeweiligen Datensatzes 31 - 34, das jedoch zunächst noch unbelegt ist, betrifft ein Clusterdatum. Das erfindungsgemäße Verfahren beruht insbesondere auf dem Gedanken, zu jedem der Empfänger 4 - 7 respektive Objekte 18 - 26 festzustellen, ob dieser einem Cluster 27, 28 zuordenbar ist und, falls ja, zu welchem. Anders ausgedrückt werden im Rahmen des erfindungsgemäßen Verfahrens Informationen dahingehend bestimmt, welche der Objekte 18 - 26 einen gemeinsamen Cluster 27, 28 bilden. Die entsprechenden Datenfelder werden sodann, sofern das jeweilige Objekt 18 - 26 einem Cluster 27, 28 zuordenbar sind, mittels der Steuereinrichtung 3 ausgefüllt.

Die Bestimmung dieser Information kann anhand einer nutzerseitig oder automatisch erfolgenden Vorgabe erfolgen, mittels der die bereits vorab bekannten Cluster 27, 28 angegeben werden. Bezogen auf das vorliegende Beispiel bedeutet dies beispielsweise, dass einem Nutzer bekannt ist, dass die Objekte 18 - 21 respektive die Sender 8 - 11 dem Cluster 27 und/oder dass die Objekte 22 - 25 respektive die Sender 12 - 15 dem Cluster 28 zugeordnet sind. Der Nutzer kann diese Informationen der Steuereinrichtung 3 über eine Eingabeschnittstelle 35, die als ein Mensch-Maschine-Interface bezeichnet werden kann, der Sender-Empfänger-Anordnung 2 bereitstellen. Zusätzlich oder alternativ kann diese Information seitens eines Betriebssystems, das im Rahmen der Durchführung der vorliegenden Transportvorgänge genutzt wird, der Steuereinrichtung 3 bereitgestellt werden. Mittels der Steuereinrichtung 3 wird die entsprechende Information sodann in das dem Clusterdatum zugeordnete Datenfeld des jeweiligen Datensatzes 31 - 34 eingetragen, etwa als eine fortlaufende und den jeweiligen Cluster 27, 28 kennzeichnende Zahl.

Insbesondere da nur in Ausnahmefällen Informationen bezüglich der Cluster 27, 28 von Haus auf bekannt sein dürften, ist bevorzugt vorgesehen, dass das Bestimmen, ob vorliegend Objekte 18 - 21 Clustern 27, 28 zuordenbar sind und, falls ja, welchen, anhand einer Auswertung der Datensätze 31 - 34 erfolgt. Dies kann grundsätzlich im Rahmen eines k-Meansund/oder eines DBSCAN- und/oder eines spektralen Clusteringverfahrens erfolgen. Zudem ist denkbar, dass hierzu eine, insbesondere seitens der Steuereinrichtung implementierte, künstliche Intelligenz, genutzt wird.

Nachfolgend wird auf Fig. 2 Bezug genommen, die ein Koordinatensystem zeigt, in dem die Datensätze 31 - 34 graphisch dargestellt sind. Die Abszisse 36 dieses Koordinatensystems zeigt das Zeitdatum respektive die Zeit, vorliegend zwischen 0 und 200 Sekunden. Die Ordinate 37 dieses Koordinatensystems zeigt das Signal- und mithin Positionsdatum respektive den um einen konstanten Offset verschobenen RSSI-Wert, vorliegend zwischen 0 und 50. Die Datensätze 31 - 34 stellen jeweils Punkte in diesem Koordinatensystem dar und sind zur besseren Erkennbarkeit mittels Zeitkurven bildende Linien miteinander verbunden. Die Datensätze 31 sind mittels einer gestrichpunkteten, die Datensätze 32 mittels einer gestrichelten, die Datensätze 33 mittels einer durchgezogenen und die Datensätze 34 mittels einer gepunkteten Linie miteinander verbunden. Der Übersichtlichkeit halber zeigt Fig. 2 zeigt nicht alle, sondern nur einige der erfassten Datensätze 31 - 34. So betreffen alle gezeigten Datensätze 31 - 34 nur einen der Empfänger 4 - 7, weisen also dasselbe Empfängerdatum auf.

Die Datensätze 31 wurden anhand der Sendersignale 30 des an dem Objekt 18 angeordneten Senders 8 generiert. Die weiteren, nicht dargestellten Datensätze betreffend die übrigen Objekte 19 - 21 des Clusters 27 entsprechen, abgesehen von statistischen Abweichungen, dem Datensatz 31. Der Cluster 27 verbleibt während der gesamten Durchführung des Verfahrens gemäß der in Fig. 1 gezeigten Situation unbewegt in der Nähe des Tors 17, sodass die Datensätze 31 während der gesamten in Fig. 2 gezeigten Zeitintervalls zwischen 0 und 200 Sekunden vorliegen.

Die Datensätze 32 wurden anhand der Sendersignale 30 des an dem Objekt 22 angeordneten Senders 12 generiert. Der zugehörige Cluster 28 wird während der Durchführung des Verfahrens zwischen den Zeitpunkten 0 und 100 Sekunden gemäß dem in der Fig. 1 gezeigten Pfeil 38 durch das Tor 17 bewegt, wobei das Objekt 22 respektive der Cluster 28 ab dem Zeitpunkt 100 Sekunden den Erfassungsbereich des jeweiligen Empfängers 4 - 7 verlässt, so dass für die übrigen gezeigten Zeitpunkte bis 200 Sekunden keine Datensätze 32 mehr vorliegen.

Die Datensätze 33 wurden anhand der Sendersignale 30 des an dem Objekt 23 angeordneten Senders 13 generiert. Die für die Datensätze 32 erläuterten Aspekte gelten gleichermaßen für die Datensätze 33, sodass sich diese Datensätze, abgesehen von statistischen Abweichungen, einander entsprechen beziehungsweise vergleichbar sind. Selbiges gilt für die weiteren, nicht dargestellten Datensätze betreffend die übrigen Objekte 24, 25 des Clusters 28, sodass diese, abgesehen von statistischen Abweichungen, den Datensätzen 32, 33 entsprechen.

Die Datensätze 34 wurden anhand der Sendersignale 30 des an dem Objekt 26 angeordneten Senders 16 generiert, der keinem der Cluster 27, 28 zuordenbar ist. Das Objekt 26 verbleibt während der Durchführung des Verfahrens gemäß der in Fig. 1 gezeigten Situation unbewegt am Tor 17, sodass die Datensätze 34 während der gesamten in Fig. 2 gezeigten Zeitintervalls zwischen 0 und 200 Sekunden vorliegen.

Nachfolgend werden Details zur Auswertung der Datensätze 31 - 34 erläutert. So wird angenommen, dass unmittelbar nach der Generierung der Datensätze 31 - 34 noch keine Informationen hinsichtlich der Existenz etwaiger Cluster 27, 28 vorliegen, wobei die nachfolgende Auswertung zunächst die Bestimmung selbiger zum Ziel hat. So wird seitens der Steuereinrichtung 3 bezüglich der Objekte 18 - 26, beispielhaft jeweils paarweise, ein Wert für eine Wahrscheinlichkeit, dass diese beiden Objekte 18 - 26 zu einem gemeinsamen Cluster 27, 28 gehören, bestimmt. Als ein Ausgangspunkt kann ein Wert für die Wahrscheinlichkeit angenommen werden, der eine erfahrungsgemäße Wahrscheinlichkeit angibt, dass zwei beliebig ausgewählte Objekte zu einem Cluster gehören. Dieser Wert beträgt exemplarisch 50%.

Zur Bestimmung, ob die Objekte 18 - 26 einen Cluster 27, 28 bilden, werden die Datensätze 31 - 34 hinsichtlich verschiedener Aspekte ausgewertet. So erfolgt eine Auswertung dahingehend, ob Datensätze 31 - 34, die unterschiedlichen Objekten 18 - 21 zugeordnet sind, in einem selben Zeitintervall erfasst wurden. Aus Fig. 2 wird ersichtlich, dass dies für die dem Cluster 28 zugeordneten Datensätzen 32, 33 der Fall ist, da diese allesamt in den Zeitraum zwischen 0 und 100 Sekunden fallen. Selbiges gilt für die dem Cluster 27 zugeordneten Datensätze 31 und dem Datensatz 34, da diese allesamt während des Zeitraums zwischen 0 und 200 Sekunden vorliegen. In diesem Fall wird die Wahrscheinlichkeit, dass die Objekte 18 - 21 sowie die Objekte 22 - 25, 26 jeweils einen gemeinsamen Cluster 27, 28 bilden, erhöht.

Zudem werden die Datensätze 31 - 34 ausgewertet, ob eine Abwesenheit von unterschiedlichen Objekten 18 - 21 zugeordneten Datensätzen 31 - 34 in einem selben Zeitintervall gegeben ist. Aus Fig. 2 wird ersichtlich, dass dies der Fall ist für die dem Cluster 28 zugeordneten Datensätze 32, 33, da diese allesamt während des Zeitraums zwischen 100 und 200 Sekunden abwesend sind. So wird die Wahrscheinlichkeit, dass die Objekte 18 - 21 einen gemeinsamen Cluster 27, 28 bilden, erhöht.

Ferner werden zur Bestimmung, ob mehrere Objekte 18 - 21 einen Cluster 27, 28 bilden, die diesen Objekten 18 - 21 zugeordneten Datensätze 31 - 34 dahingehend ausgewertet, ob Datensätze 31 - 34, die unterschiedlichen Objekten 18 - 21 zugeordnet sind und die während eines selben Zeitintervalls erfasst wurden, mittels des selben Empfängers 4 - 7 oder mittels derselben Gruppe von Empfängern 4 - 7 erfasst wurden respektive ob eine Nichterfassung von unterschiedlichen Objekten 18 - 21 zugeordneten Datensätzen 31 - 34 betreffend den selben Empfänger 4 - 7 oder die selbe Gruppe von Empfängern 4 - 7 während des Zeitraums gegeben ist. Dies ist für alle in Fig. 2 gezeigten Datensätze 31 - 34 im Zeitraum zwischen 0 und 100 Sekunden der Fall. So wird in diesem Fall die Wahrscheinlichkeit, dass die jeweiligen Objekte 18 - 26 einen gemeinsamen Cluster 27, 28 bilden, erhöht. Betreffend den Zeitraum zwischen 100 Sekunden und 200 Sekunden werden die dem Objekt 26 zugeordneten Datensätze 34 weiterhin empfangen, nicht jedoch die Datensätze 32, 33 betreffend die Objekte 18 - 21 des Clusters 27. Folglich werden die paarweisen Wahrscheinlichkeitswerte, dass das Objekt 26 und jedes der Objekte 18 - 21 zu einem gemeinsamen Cluster 27, 28 gehören, entsprechend reduziert.

Weiterhin werden zur Bestimmung, ob mehrere Objekte 18 - 21 einen Cluster 27, 28 bilden, die diesen Objekten 18 - 21 zugeordneten Datensätze 31 - 34 dahingehend ausgewertet, ob eine Anzahl oder eine Frequenz von vorliegenden Datensätzen 31 - 34, die unterschiedlichen Objekten 18 - 21 zugeordnet sind und die während eines selben Zeitintervalls erfasst wurden, nicht oder nur wenig voneinander abweichen. So wird die gesamte Anzahl der Datensätze 31 - 34 während eines bestimmten Zeitraums oder die Anzahl pro Zeiteinheit, insbesondere pro Minute, vorliegender Datensätze 31 - 34 bestimmt und überprüft, ob diese Anzahl oder Frequenz hinsichtlich verschiedener Objekte 18 - 26 vergleichbar ist. Aus Fig. 2 wird ersichtlich, dass dies insbesondere für die Datensätze 32, 33 der Fall ist. So wird die Wahrscheinlichkeit, dass die Objekte 18 - 21 einen gemeinsamen Cluster 27, 28 bilden, erhöht.

Außerdem werden zur Bestimmung, ob mehrere Objekte 18 - 21 einen Cluster 27, 28 bilden, die diesen Objekten 18 - 21 zugeordneten Datensätze 31 - 34 dahingehend ausgewertet, ob Datensätze 31 - 34, die unterschiedlichen Objekten 18 - 21 zugeordnet sind und die während eines selben Zeitintervalls erfasst wurden, bezüglich des Signaldatums nicht oder nur wenig voneinander abweichen. So wird etwa bezüglich der Datensätze 32, 33 eine Abweichung des RSSI-Wert mittels der Summe der Quadrate der Abweichungen für den Zeitraum zwischen 0 und 100 Sekunden errechnet, wobei exemplarisch überprüft wird, ob dieser Wert einen vorgegebenen Grenzwert unterschreitet, wobei in diesem Fall die Wahrscheinlichkeit, dass die zugehörigen Objekte 18 - 21 einen Cluster 27 bilden, erhöht wird.

Schließlich werden zur Bestimmung, ob mehrere Objekte 18 - 21 einen Cluster 27, 28 bilden, die diesen Objekten 18 - 21 zugeordneten Datensätze 31 - 34 dahingehend ausgewertet, ob Datensätze 31 - 34, die unterschiedlichen Objekten 18 - 21 zugeordnet sind und die während eines selben Zeitintervalls erfasst wurden, bezüglich einer Streuung des Signaldatums nicht oder nur wenig voneinander abweichen. Anders ausgedrückt, wird ein Maß für die Streuung respektive Qualität einer Zeitkurve betreffend jeden der Datensätze 31 - 34 bestimmt, beispielsweise das Signal-zu-Rausch-Verhältnis. Es wird überprüft, ob dieser Wert für verschiedene Datensätze 31 - 34 vergleichbar ist, was vorliegend für die Datensätze 32, 33 der Fall ist, sodass die Wahrscheinlichkeit, dass die Objekte 18 - 21 einen Cluster 27 bilden, erhöht wird.

Die soeben erläuterte Vorgehensweise betreffend die Auswertung der Datensätze 31 - 34 führt zu dem Ergebnis, dass die Wahrscheinlichkeit, dass die Objekte 18 - 21 einen Cluster 27 bilden, und dass die Wahrscheinlichkeit, dass die Objekte 22 - 25 einen Cluster 28 bilden, jeweils einen fest vorgegebenen Wahrscheinlichkeitsgrenzwert überschreitet. Folglich wird bezüglich der weiteren Auswertung respektive Durchführung des Verfahrens angenommen beziehungsweise davon ausgegangen, dass dies auch tatsächlich der Fall ist. Weiterhin führte die Auswertung zu dem Ergebnis, dass die Wahrscheinlichkeit, dass das Objekt 26 mit den übrigen Objekten 18 - 25 einen Cluster bildet, den Wahrscheinlichkeitsgrenzwert unterschreitet, sodass bezüglich des Objekts 26 nicht davon ausgegangen wird, dass dieses einem Cluster zuordenbar ist.

Bezüglich der weiteren Datenauswertung beziehungsweise des Trackings ist vorgesehen, dass jeweils diejenigen der Datensätze 32 - 34, die einen der Cluster 27, 28 bildenden Objekte 18 - 21, 22 - 25 zugeordnet sind unter der Annahme aggregiert werden, dass sich diese Objekte 18 - 21, 22 - 25 jeweils, wie dies für die Cluster 27, 28 vorausgesetzt wird, gemeinsam und gleichförmig bewegen. Vorliegend werden die den Objekten 18 - 21 respektive dem Cluster 27 zugeordneten Datensätze 32, 33 addiert, wobei alternativ auch eine Mittelung diesbezüglich denkbar ist. Dies bewirkt jeweils eine Verbesserung der Datenqualität beziehungsweise Erhöhung des Signal-zu-Rausch-Verhältnisses der jeweiligen Zeitkurve, wobei das Ergebnis der aggregierten Datensätze 39 in der Fig. 3 gezeigt ist, die dasselbe Koordinatensystem wie Fig. 2 zeigt. Selbiges gilt für die den Objekten 22 - 25 respektive dem Cluster 28 zugeordneten Datensätze 31, wobei die hieraus resultierenden, aggregierten Datensätze 40 ebenfalls in der Fig. 3 gezeigt sind. Zur Generierung der aggregierten Datensätze 39, 40 werden zudem Datenausreißer, die gravierend von den übrigen Datensätze 31, 32, 33 abweichen, herausgefiltert. Die Datensätze 34 betreffend das Objekt 26 bleiben, da dieses keinem Cluster zuordenbar ist, unverändert.

Zur weiteren Auswertung werden die in der Fig. 3 gezeigten Datensätze 34, 39, 40 genutzt. So sind insbesondere die aggregierten Datensätze 39, 40 bezüglich ihrer Datenqualität vorliegend ausreichend, dass diese für die Bestimmung der Absolutposition des jeweiligen Clusters 27, 28 respektive der jeweils zugehörigen Objekte 18 - 21, 22 - 25 mittels einer Triangulation geeignet sind. Häufig findet jedoch eine Auswertung lediglich dahingehend statt, ob die Objekte 18 - 26 das Tor 17 passiert haben, was vorliegend anhand der Zeitkurve der aggregierten Datensätze 39 für die Objekte 18 - 21 des Clusters 27 mit hoher Wahrscheinlichkeit der Fall war.

So ist die nach der Datenaggregation erfolgende, weitere Auswertung der Datensätze 31 - 34 insbesondere darauf gerichtet, zu bestimmen, ob respektive welche Objekte 18 - 26 das Empfänger-Tor 17 passiert haben. Diesbezüglich sei angenommen, dass, dass die Sendersignale 30 eines bestimmten Senders respektive Objekts, beispielhaft des Senders 13 beziehungsweise Objekts 23, nur mit äußerst schlechter Datenqualität oder gar nicht erfasst worden sind, etwa aufgrund eines senderseitigen Defekts oder dergleichen. Allerdings ist dieses Objekt 23 beziehungsweise dieser Sender 13 dem Cluster 28 zuordenbar, für den ermittelt wurde, dass dieser das Empfänger-Tor 17 passiert hat. Dieses Resultat ist mithin gleichermaßen auf das Objekt 23 trotz dessen defekten Senders 13 übertragbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur Generierung und Auswertung von Datensätzen (31 - 34) betreffend sich bewegende Objekte (18 - 26), wobei zur Generierung der Datensätze (31 - 34) eine Sender-Empfänger-Anordnung (2) verwendet wird, die eine Steuereinrichtung (3), mehrere Sender (8 - 16), mittels denen die Objekte (18 - 26) bestückt sind, und wenigstens einen Empfänger (4 - 7) umfasst, wobei zur Generierung der Datensätze (31 - 34) jeweils die folgenden Schritte durchgeführt werden:
- Generieren eines funkbasierten Sendersignals (30) mittels wenigstens einem der Sender (8 - 16) und Übertragen des Sendersignals (30) an wenigstens einen der Empfänger (4 - 7), sofern sich der Sender (8 - 16) in einem Erfassungsbereich des Empfängers (4 - 7) befindet,
- Generieren des Datensatzes (31 - 34) mittels der Steuereinrichtung (3) anhand des Sendersignals (30), wobei der Datensatz (31 - 34) ein Identifizierungsdatum, das eine Identifizierung des diesem Datensatz (31 - 34) zugeordneten Objekts (18 - 26) betrifft, ein Signaldatum, das das übertragene Sendersignal (30) betrifft, und ein Zeitdatum, das einen Zeitpunkt betrifft, zu dem sich das jeweilige Objekt (18 - 26) an der mittels des Signaldatums beschriebenen Position befindet, umfasst,
wobei zur Auswertung der Datensätze (31 - 34) die folgenden Schritte durchgeführt werden:
- Bestimmen wenigstens eines Clusters (27, 28) umfassend wenigstens zwei der Objekte (18 - 26), wobei Objekte (18 - 26) dann als zu einem Cluster (27, 28) zugehörend gelten, wenn sich diese zumindest wahrscheinlich gemeinsam bewegen,
- Aggregieren der die Objekte (18 - 26) des Clusters (27, 28) betreffenden Datensätze (31 - 34) unter der Annahme, dass sich die den Cluster (27, 28) bildenden Objekte (18 - 26) gemeinsam bewegen und Verwenden der hierbei erhaltenen Ergebnisse zur weiteren Auswertung der Datensätze (31 - 34).

2. Verfahren nach Anspruch 1, **dadurch gekennzeichnet, dass** mittels des wenigstens einen Empfängers (4 - 7) ein funkbasiertes Anfragesignal (29) generiert wird, wobei das wenigstens eine Sendersignal (30) als Reaktion auf die Erfassung des Anfragesignals (29) durch den jeweiligen Sender (8 - 16) generiert wird, wobei insbesondere vorgesehen ist, dass die zur Generierung des Sendersignals (30) genutzte Energie seitens des jeweiligen Senders (8 - 16) aus dem Anfragesignal (29) gewonnen wird oder seitens eines elektrischen Energiespeichers des jeweiligen Senders (8 - 16) bereitgestellt wird.

3. Verfahren nach Anspruch 1 oder 2, **dadurch gekennzeichnet, dass** das Signaldatum eine aktuelle Position des jeweiligen Objekts (18 - 26) betrifft.

4. Verfahren nach Anspruch 3, **dadurch gekennzeichnet, dass** das Signaldatum anhand einer Signalstärke des seitens des Empfängers (4 - 7) erfassten Sendersignals (30) ermittelt wird oder diese beschreibt, und/oder dass das Signaldatum eine binäre Information ist, die angibt, ob seitens des Empfängers (4 - 7) das Sendersignal (30) erfasst wurde.

5. Verfahren nach einem der vorangehenden Ansprüche, **dadurch gekennzeichnet, dass** das Bestimmen des wenigstens eines Clusters (27, 28) anhand einer nutzerseitig oder automatisch erfolgenden Vorgabe erfolgt, mittels der wenigstens ein bekannter Cluster (27, 28) angegeben wird.

6. Verfahren nach einem der vorangehenden Ansprüche, **dadurch gekennzeichnet, dass** das Bestimmen des wenigstens einen Clusters (27, 28) anhand einer Auswertung der Datensätze (31 - 34), insbesondere mittels eines k-Means- und/oder eines DBSCAN- und/oder eines spektralen Clusteringverfahrens und/oder einer künstlichen Intelligenz, erfolgt.

7. Verfahren nach Anspruch 6, **dadurch gekennzeichnet, dass** zur Bestimmung, ob mehrere Objekte (18 - 26) einen Cluster (27, 28) bilden, die diesen Objekten (18 - 26) zugeordneten Datensätze (31 - 34) dahingehend ausgewertet werden, ob Datensätze (31 - 34), die unterschiedlichen Objekten (18 - 26) zugeordnet sind, in einem selben Zeitintervall erfasst wurden und/oder ob eine Abwesenheit von unterschiedlichen Objekten (18 - 26) zugeordneten Datensätzen (31 - 34) in einem selben Zeitintervall gegeben ist.

8. Verfahren nach Anspruch 6 oder 7, **dadurch gekennzeichnet, dass** die Datensätze (31 - 34) jeweils ein Empfängerdatum umfassen, das eine Identifizierung eines von mehreren Empfängern (4 - 7), mittels dem das jeweilige Sendersignal (30) erfasst wurde, betrifft, wobei zur Bestimmung, ob mehrere Objekte (18 - 26) einen Cluster (27, 28) bilden, die diesen Objekten (18 - 26) zugeordneten Datensätze (31 - 34) dahingehend ausgewertet werden, ob Datensätze (31 - 34), die unterschiedlichen Objekten (18 - 26) zugeordnet sind und die während eines selben Zeitintervalls erfasst wurden, mittels des selben Empfängers (4 - 7) oder mittels den selben Empfängern (4 - 7) erfasst wurden und/oder eine Nichterfassung von unterschiedlichen Objekten (18 - 26) zugeordneten Datensätzen (31 - 34) betreffend den selben Empfänger (4 - 7) oder dieselben Empfänger (4 - 7) gegeben ist.

9. Verfahren nach Anspruch 2 und einem der Ansprüche 6 bis 8, **dadurch gekennzeichnet, dass** die Generierung des Anfragesignals (29) mehrfach sukzessive, insbesondere zyklisch, erfolgt, wobei zur Bestimmung, ob mehrere Objekte (18 - 26) einen Cluster (27, 28) bilden, die diesen Objekten (18 - 26) zugeordneten Datensätze (31 - 34) dahingehend ausgewertet werden, ob eine Anzahl und/oder eine Frequenz von vorliegenden Datensätzen (31 - 34), die unterschiedlichen Objekten (18 - 26) zugeordnet sind und die während eines selben Zeitintervalls erfasst wurden, nicht oder nur wenig voneinander abweichen.

10. Verfahren nach einem der Ansprüche 6 bis 9, **dadurch gekennzeichnet, dass** zur Bestimmung, ob mehrere Objekte (18 - 26) einen Cluster (27, 28) bilden, die diesen Objekten (18 - 26) zugeordneten Datensätze (31 - 34) dahingehend ausgewertet werden, ob Datensätze (31 - 34), die unterschiedlichen Objekten (18 - 26) zugeordnet sind und die während eines selben Zeitintervalls erfasst wurden, bezüglich des Signaldatums nicht oder nur wenig voneinander abweichen.

11. Verfahren nach einem der Ansprüche 6 bis 10, **dadurch gekennzeichnet, dass** zur Bestimmung, ob mehrere Objekte (18 - 26) einen Cluster (27, 28) bilden, die diesen Objekten (18 - 26) zugeordneten Datensätze (31 - 34) dahingehend ausgewertet werden, ob Datensätze (31 - 34), die unterschiedlichen Objekten (18 - 26) zugeordnet sind und die während eines selben Zeitintervalls erfasst wurden, bezüglich einer Streuung des Signaldatums nicht oder nur wenig voneinander abweichen.

12. Verfahren nach einem der vorangehenden Ansprüche, **dadurch gekennzeichnet, dass** zur Aggregation der die Objekte (18 - 26) des Clusters (27, 28) betreffenden Datensätze (31 - 34) eine Addition oder eine Mittelung betreffend die Signaldaten vorgenommen wird.

13. Verfahren nach einem der vorangehenden Ansprüche, **dadurch gekennzeichnet, dass** nach der Aggregation der Signaldaten, die Positionsdaten darstellen, im Rahmen der weiteren Auswertung der Datensätze (31 - 34)
- eine Absolutposition des Clusters (27, 28) bestimmt wird, insbesondere anhand einer Triangulierung von Datensätzen (31 - 34) betreffend unterschiedliche Empfänger (4 - 7), und/oder
- bestimmt wird, ob ein Cluster (27, 28) den wenigstens einen Empfänger (4 - 7), insbesondere einen Ort, an dem mehrere Empfänger (4 - 7) nebeneinander positioniert sind, passiert hat.

14. Steuereinrichtung für eine Sender-Empfänger-Anordnung (2), wobei die Sender-Empfänger-Anordnung (2) mehrere Sender (8 - 16) und wenigstens einen Empfänger (4 - 7) umfasst, wobei die Steuereinrichtung (3) zur Durchführung eines Verfahrens nach einem der vorangehenden Ansprüche eingerichtet ist.

15. Sender-Empfänger-Anordnung, umfassend eine Steuereinrichtung (3) nach Anspruch 14 und mehrere Sender (8 - 16) sowie wenigstens einen Empfänger (4 - 7).
